# EUROPEAN PATENT SPECIFICATION

(11) **EP 1 072 504 B1**
(45) Date of publication and mention of the grant of the patent: **13.07.2005**
(21) Application number: 00202672.2
(22) Date of filing: 27.07.2000
(51) Int. Cl.: B62J 9/00

(54) **Double cycle pannier and method for fastening a double cycle pannier to a carrier and releasing it therefrom**
Fahrraddoppelsatteltasche und Verfahren zur lösbaren Befestigung einer Fahrraddoppelsatteltasche an einem Gepäckträger
Sacoche double de bicyclette et méthode de fixation détachable d'une sacoche double sur un porte-bagage

(30) Priority: 29.07.1999 NL 1012734
(43) Date of publication of application: 31.01.2001
(73) Proprietor: Beheermaatschappij F. Hesling Oss B.V., 5351 AB Berghem (NL)
(72) Inventor: Hesling, Fransiscus Johannes Sybrandus, 5351 AB Berghem (NL)
(74) Representative: Van den Heuvel, Henricus Theodorus

(56) References cited:
- NL-A- 6 913 294
- NL-A- 8 201 395
- NL-C- 74 532
- NL-C- 77 650
- NL-C- 83 446
- NL-C- 89 162
- US-A- 4 569 108

## Description

The invention relates to a double cycle pannier with at least two container parts which engage on opposite sides on a connecting piece, which connecting piece is provided with connecting means for fastening the pannier to a carrier. The invention also relates to a method for fastening a double pannier to a carrier and releasing it therefrom.

According to the prior art double panniers of the type stated in the preamble are usually fastened with straps to the carrier of a two-wheeler. Such a carrier is also designated as luggage carrier. In addition to the straps with which the pannier is fastened to the upper side of the carrier, there are further additional straps or hooks fastened to the container parts to thereby enable fastening of the pannier to upright parts of the two-wheeler. Thus is prevented that the container parts can swing freely outward during riding or when forces are exerted in other manner on the container parts. The double pannier of the prior art is generally connected to a two-wheeler for a longer time. Fastening of the double pannier requires some skill and can be particularly burdensome for the cycle retailer since, when a double pannier is sold, it is normally fastened to the cycle as a service, although this operation requires at least a few minutes. Due to lack of time or lack of knowledge double panniers are frequently fastened to a carrier in askew position. Loosening of the straps after frequent use of the two-wheeler with double pannier can also be problematic.

The Dutch patent NL 89162 describes a double cycle pannier with two container parts, wherein the connecting means for the pannier to a luggage carrier consists of two overlapping sliding plates, connected by a spring, and provided with hooks at the opposite ends of the plates that engage the sides of a luggage carrier. The positioning of such a pannier tends to be rather unstable.

The present invention has for its object to provide an improved double cycle pannier as well as a method for the fastening and releasing thereof, whereby the pannier can be fastened in a safe and correct manner with little effort. It is another object of the invention to provide a pannier that is fixed more rigidly on a carrier.

The invention provides for this purpose a double cycle pannier with at least two container parts which engage on opposite sides on a connecting piece, which connecting piece is provided with connecting means for fastening the pannier to a carrier, wherein the connecting means comprise at least one coupling member connected resiliently to the pannier for engaging on a carrier counter to a bias, characterized in that the connecting piece of the pannier is provided with at least one thickened strengthening member in which is arranged a recess for partly receiving a coupling member in an active, coupled position. Although the designation pannier gives the impression that such a pannier is only used for assembly with a bicycle, panniers are also applied for assembly with other two-wheelers such as for instance mopeds and the like. The pannier according to the invention has the important advantage that the coupling member can be brought into contact with the carrier in relatively simple manner such that the pannier can be attached with minimal effort. The pannier can be assembled with a two-wheeler in correct manner in only a few seconds since the resilient fastening of the coupling member to the connecting piece determines the ultimate positioning; over-tightening or under-tightening of a coupling member does not occur. The very simple fitting of the double pannier has the advantage that a retailer can also fit the pannier in a very short time, which will be an extra selling point for him. In addition, the end user can also fasten the pannier in simple manner; even less practical persons will be able to fasten the pannier on their own. A significant additional advantage is that not only is fitting simplified but that release of the pannier also costs little effort. It will hereby be possible for use of the double pannier to change. Up to the present time a double pannier has not been removed when not needed during a determined journey because of the considerable effort which this required. With the cycle pannier according to the invention it is possible to remove the pannier when no transport volume is required. It is also possible to release the pannier when the transport volume is desired at a distance from the cycle; it is thus conceivable for instance for the double pannier to be also used as shopping bag. The necessary provisions will then have to be arranged for the purpose of also enabling use of the pannier as carrier bag. One or more handles which can be fixed to the connecting piece can for instance be envisaged here. Yet another advantage of the coupling member resiliently connected to the pannier is that flexibility in use hereby results. The resilient fastening of the coupling member enables assembly of the pannier with carriers of diverse dimensions. The pannier is provided with at least one thickened strengthening member. This strengthening member can serve to transmit the bias forces with which the coupling members engage on the carrier; the material from which the connecting piece is manufactured is hereby not loaded with the bias force. The strengthening members can be provided close to the middle of the connecting piece with a fold line such that the double pannier (and also the connecting piece) can be folded together. In the thickened strengthening member is preferably arranged one recess for partly receiving a coupling member in the active, coupled position. Such a recess can also be designated as a receiving space and has the advantage that the more or less rigid position in which the coupling member engages on the carrier is transmitted to the strengthening member, and therefore the connecting piece of the pannier. The more or less rigid fixing of the coupling member thus results in a more or less rigid positioning of the connecting piece of the pannier.

In a preferred embodiment the connecting means comprise at least one spring element which is provided on an end of a coupling member and which can be connected to the connecting piece of the pannier on the side remote from the coupling member. For engaging on this spring element - which is provided with a coupling member on the side remote from the connecting piece - the connecting piece of the pannier is preferably provided with at least one engaging member. Such a construction is very simple to manufacture and thereby does not increase costs, or hardly so, relative to the existing double panniers with strap fastening. As spring element can be chosen a resilient ring, such as for instance an O-ring, a strip of resilient material or other means. Many embodiment variants can thus be envisaged wherein use can for instance be made of standard commercially available structural parts such as for instance the stated O-rings.

In a particular preferred embodiment the connecting piece is provided with a plurality of placed apart engaging members for resiliently connecting a coupling member selectively to at least one desired engaging member depending on the size of the carrier to which the pannier is connected. While the resilient fastening of the coupling member to the connecting piece does enable connection of the pannier to carriers of diverse dimensions, when the carriers vary to a considerable degree in terms of dimensions this can result in too great or too small a bias on a coupling member engaging on a carrier. In order to prevent this a plurality of engaging members can be arranged on the connecting piece such that in the case of very wide carriers a spring element can be connected to the pannier at a different, more outwardly placed position than in the case of narrower carriers. In the case of a narrower carrier a spring element can be coupled to a more inwardly placed engaging member.

In another preferred embodiment two coupling members engage on the opposite sides of a spring element, which spring element can be connected to the connecting piece of the pannier. In this variant two coupling members can be held in position with a single spring element, wherein the pannier must engage on the spring element by means of for instance a tubular construction on the connecting piece.

The coupling member can be embodied as a hook and is preferably provided with a contact surface for engaging on a carrier with a resilient covering layer. The coupling member can thus engage firmly on a carrier with a limited chance of the coupling member disengaging from the carrier. The resilient covering layer has the advantage that the coating of the carrier is not damaged and, more importantly, that the coupling member engages on the carrier such that it is not slidable, or only with great difficulty, relative to the carrier. Yet another advantage is that the coupling member is less likely to start rattling or vibrating against the carrier. A drawback of the prior art double panniers is that they are usually slidable in longitudinal direction of the cycle, or at least that the fastening of the pannier on the carrier does not secure the pannier in longitudinal direction. With the pannier according to the invention the engagement of the double pannier on the carrier can also be take a form secured in longitudinal direction.

In yet another preferred embodiment the coupling member is assembled with the connecting piece of the pannier via a guide. The position of the coupling member is thus precisely controllable both in non-fitted and fitted situation, which results in a simplified fitting as well as a good transmission of the rigid positioning of a coupling member to the connecting piece of the pannier. For the engagement on the coupling member during assembly and disassembly the coupling member can be provided with a protruding grip part, but it is also possible for this grip part to be folded away. In this latter case must be envisaged for instance the grip part of a zip fastener which also engages in fold-away manner. The advantage of such a grip part which can be folded away is that in the fitted situation it will pivot to a non-obstructing position while it can be placed selectively in a position when a force must be exerted thereon.

The invention also provides a method for fastening a double cycle pannier according to the invention to a carrier by the steps of: A. placing a connecting piece of a double pannier against a carrier such that the pannier engages on one side on the periphery of the carrier, B. pulling out at least one coupling member counter to a bias such that the coupling member, on a side of the carrier opposite where the pannier engages, extends outside the periphery of the carrier, and C. releasing the coupling member pulled out counter to a bias such that the coupling member engages under bias on a side of the carrier opposite where the pannier engages. During step A. preferably at least one coupling member fastened resiliently to the connecting piece is brought into contact with the periphery of the carrier. Even more preferably, after fastening according to step C., a coupling member drops at least partially into a receiving space arranged in the connecting piece. By means of this method a double pannier can be fitted in simple manner on a carrier, with the advantages as already described above with reference to the double pannier according to the invention.

The invention furthermore provides a method for releasing a double pannier according to the invention with connecting piece from a carrier by the steps of: D. displacing at least one coupling member counter to a bias, which member engages under bias on the periphery of a carrier to which the pannier is fastened, to a position in which the coupling member is free of the carrier such that the connecting piece of the double pannier only engages on one side on the periphery of the carrier, and e. releasing from the carrier the connecting piece of the double pannier which engages on one side on the periphery of the carrier. The advantages which apply in respect of the simple fastening of a pannier largely correspond with the advantages which apply in respect of the simple release of a double pannier. The simple release also has the advantage that the pannier can be employed differently and more purposefully. This has already been elucidated with reference to the pannier according to the invention.

The present invention will be further elucidated with reference to the non-limitative embodiments shown in the following figures. Herein:
figure 1 shows a partly cut-away perspective view of a double pannier according to the invention in a position fitted on a luggage carrier,
figure 2 shows a detail view of the connecting means which form part of the pannier shown in figure 1,
figure 3 shows a detail view of alternatively embodied connecting means which can form part of a pannier according to the invention, and
figure 4 shows a detail view of a second variant of the connecting means which can form part of the pannier according to the invention.

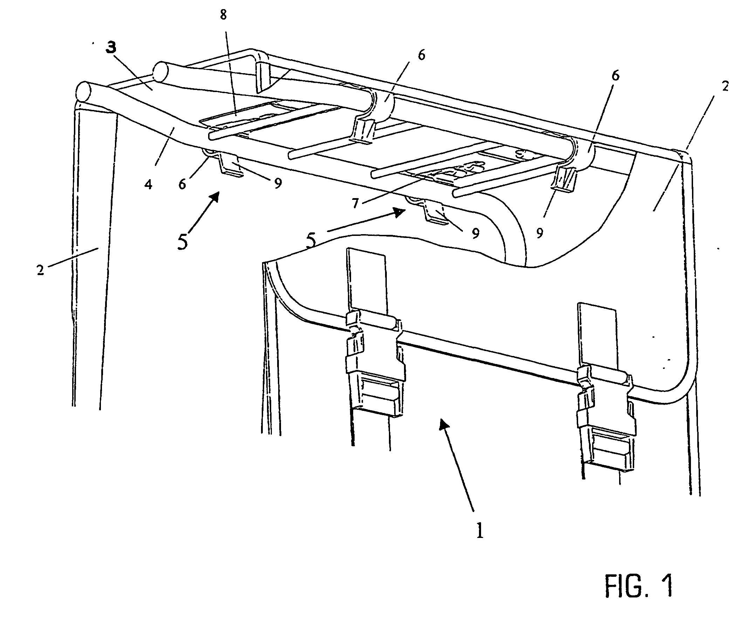

Figure 1 shows a double cycle pannier 1 provided with two container parts 2 which engage on a connecting piece 3. Container parts 2 are empty in the shown situation, but are deformable such that they can provide a considerable transport volume. Double pannier 1 is fastened to a luggage carrier 4 using connecting means 5.

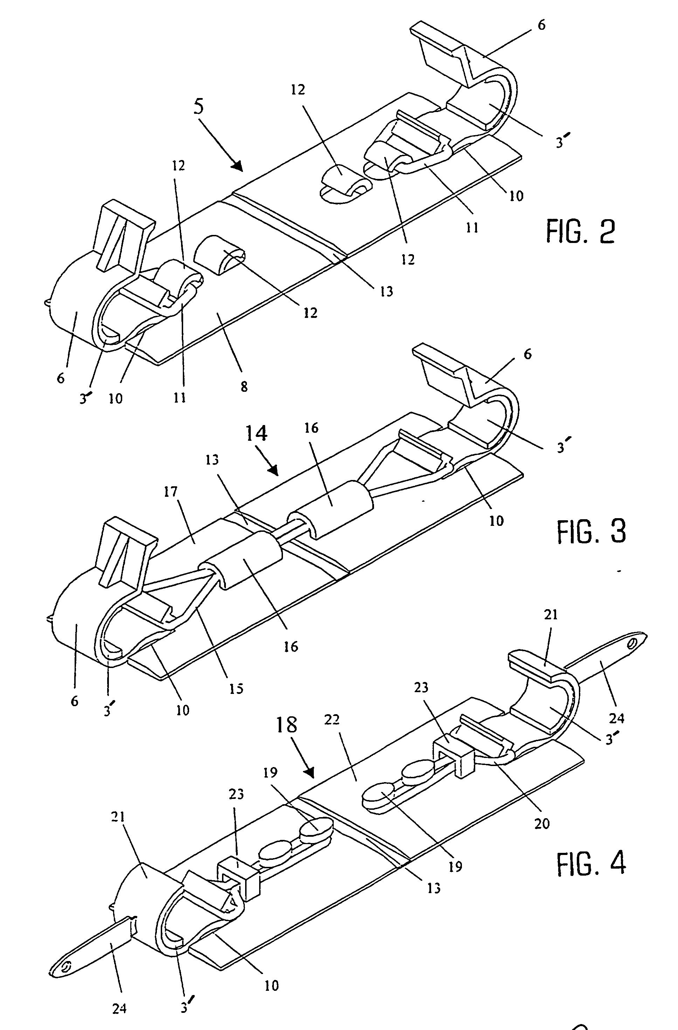

Connecting means 5 comprise hook-shaped coupling members 6 which are adapted to engage on luggage carrier 4. Hook-shaped coupling members 6 are connected via spring elements 7 to connecting piece 3 with interposing of strengthening strips 8. These strengthening strips 8 can for instance be stitched against connecting piece 3 and/or fixed to connecting piece 3 with staples. The construction of connecting means 5 will be further shown in figure 2.

Hook-shaped coupling members 6 are provided with projecting engaging parts 9 whereby hook-shaped coupling members 6 can be displaced relatively easily. Not clearly visible in this figure is the resilient layer situated between the sides of hook-shaped coupling members 6 directed toward luggage carrier 4 and the luggage carrier 4. This resilient layer contributes toward the hook-shaped coupling members being less easily slidable over luggage carrier 4. This enhances a safe fastening of double pannier 1.

For fastening respectively release of double pannier 1 one of the container parts 2 has to be lifted such that hook-shaped coupling members 6 are accessible for respectively allowing engaging of these hooks 6 on luggage carrier 4 and for release of these hooks 6 from luggage carrier 4.

Figure 2 shows connecting means 5 in detail. Herein is shown that strengthening strip 8 is provided with a recess 10 which forms a receiving space for partially receiving a hook-shaped coupling member 6. The more or less safe engagement of a hook-shaped coupling member 6 on luggage carrier 4 thus results in a likewise more or less safe positioning of strengthening strip 8 relative to luggage carrier 4.

Also shown clearly in figure 2 is that hook-shaped coupling member 6 engages on strengthening strip 8 via an O-ring 11. For this purpose strengthening strip 8 is provided with engaging members 12. Depending on the width of a luggage carrier 4 with which the double pannier must be assembled, the O-ring 11 can be connected to either of these engaging members 12.

Strengthening strip 8 is provided close to the middle with a weakened strip 13 in that strengthening strip 8 takes a less thick form here. At the position of this weakened strip 13 the strip 8 can be folded together such that the whole double pannier 1 can be supplied from the production location with a relatively limited transport volume.

Figure 3 shows alternative connecting means 14 wherein hook-shaped coupling members 6 engage on both sides on an O-ring 15. O-ring 15 is carried through tube parts 16 which form part of an alternatively embodied strengthening strip 17.

Figure 4 shows second alternative coupling means 18 wherein O-rings 20 engage on engaging means 19. These O-rings 20 are coupled to hooks 21 on the side remote from engaging members 19. For positioning of the hooks 21 a strengthening strip 22 is provided with standing guide elements 23 under which O-rings 20 are carried through. For simple displacement the hooks 21 are provided with pivotable grip parts 24 which can be compared to grip parts such as are applied in zip fasteners.

Although the invention is elucidated with reference to only a few embodiments, it will be apparent to all that the invention is in no way limited to the described and shown embodiments. On the contrary, many more variations are possible for a skilled person within the scope of the invention defined by the appended claims.

## Claims

1. Double cycle pannier (1) with at least two container parts (2) which engage on opposite sides on a connecting piece (3), which connecting piece (3) is provided with connecting means (5, 14, 18) for fastening the pannier (1) to a carrier (4),
wherein the connecting means (5, 14, 18) comprise at least one coupling member (6,21) connected resiliently to the pannier (1) for engaging on a carrier (4) counter to a bias,
**characterized in that**
the connecting piece (3) of the pannier (1) is provided with at least one thickened strengthening member (8, 17, 22) in which is arranged a recess (10) for partly receiving a coupling member (6,21) in an active, coupled position.

2. Double pannier (1) as claimed in claim 1, wherein the connecting means (5, 14, 18) comprise at least one spring element (7, 11, 15, 20) which is provided on an end of a coupling member (6,21) and which can be connected to the connecting piece (3) of the pannier (1) on the side remote from the coupling member (6, 21).

3. Double pannier (1) as claimed in claim 1 or 2, wherein the connecting piece (3) of the pannier is provided with at least one engaging member (12, 16, 19) for engaging on a spring element (7, 11, 15, 20) which is provided with a coupling member (6,21) on the side remote from the connecting piece (3).

4. Double pannier (1) as claimed in claim 3, wherein the connecting piece is provided with a plurality of placed apart engaging members (12, 19) for resiliently connecting a coupling member (6, 21) selectively to at least one desired engaging member (12, 19) depending on the size of the carrier (4) to which the pannier (1) is connected.

5. Double pannier (1) as claimed in any of the foregoing claims, wherein the coupling member (6, 21) is connected to the connecting piece (3) via a resilient ring (11,15,20).

6. Double pannier (1) as claimed in any of the claims 1-4, wherein the coupling member (6, 21) is connected to the connecting piece (3) via a strip of resilient material.

7. Double pannier (1) as claimed in any of the foregoing claims, wherein two coupling members (6, 21) engage on the opposite sides of a spring element (7, 11, 15, 20), which spring element (7, 11, 15, 20) can be connected to the connecting piece (3) of the pannier (1).

8. Double pannier (1) as claimed in any of the foregoing claims, wherein the coupling member (6, 21) consists of a hook (6, 21).

9. Double pannier (1) as claimed in any of the foregoing claims, wherein the coupling member (6, 21) is provided with a contact surface for engaging on a carrier (4) with a resilient covering layer (3').

10. Double pannier (10 as claimed in any of the foregoing claims, wherein the coupling member (6, 21) is assembled with the connecting piece (3) of the pannier (1) via a guide (16, 23).

11. Method for fastening a double cycle pannier (1) according to any of the preceding claims to a carrier (4) by the steps of:
A. placing a connecting piece (3) of the double pannier (1) against a carrier (4) such that the pannier (1) engages on one side on the periphery of the carrier (4),
B. pulling out at least one coupling member (6, 21) counter to a bias such that the coupling member (6, 21), on a side of the carrier (4) opposite where the pannier (1) engages, extends outside the periphery of the carrier (4), and
C. releasing the coupling member (6,21) pulled out counter to a bias such that the coupling member (6, 21) engages under bias on a side of the carrier (4) opposite where the pannier (1) engages.

12. Method as claimed in claim 11, wherein during step A. at least one coupling member (6, 21) fastened resiliently to the connecting piece (3) is brought into contact with the periphery of the carrier (4).

13. Method as claimed in claim 11 or 12, wherein after fastening according to step
C. a coupling member (6,21) drops at least partially into a receiving space (10) arranged in the connecting piece (3).

14. Method for releasing a double pannier (1) according to any of the claims 1-10 with connecting piece (3) from a carrier (4) by the steps of:
D. displacing at least one coupling member (6,21) counter to a bias, which member engages under bias on the periphery of a carrier (4) to which the pannier is fastened, to a position in which the coupling member (6, 21) is free of the carrier such that the connecting piece (3) of the double pannier still only engages on one side on the periphery of the carrier (4), and
E. releasing from the carrier (4) the connecting piece (3) of the double pannier (1) which engages on one side on the periphery of the carrier (4).

## Patentansprüche

1. Fahrraddoppelsatteltasche (1) mit mindestens zwei Behälterteilen (2), die an gegenüberliegenden Seiten an einem Verbindungsstück (3) angreifen, welches Verbindungsstück (3) mit Verbindungsmitteln (5, 14, 18) zur Befestigung der Satteltasche (1) an einem Gepäckträger (4) versehen ist, wobei die Verbindungsmittel (5, 14, 18) mindestens ein Kupplungsglied (6, 21) umfassen, das mit der Satteltasche (1) elastisch verbunden ist, um an einem Gepäckträger (4) gegen eine Vorspannung anzugreifen,
**dadurch gekennzeichnet, dass**
das Verbindungsstück (3) der Satteltasche (1) mit mindestens einem verdickten Verstärkungsteil (8, 17, 22) versehen ist, in dem eine Aussparung (10) zur teilweisen Aufnahme eines Kupplungsglieds (6, 21) in einer aktiven, verbundenen Position angeordnet ist.

2. Doppelsatteltasche (1) nach Anspruch 1, wobei die Verbindungsmittel (5, 14, 18) mindestens ein Federelement (7, 11, 15, 20) umfassen, das an einem Ende eines Kupplungsglieds (6, 21) vorgesehen ist und das mit dem Verbindungsstück (3) der Satteltasche (1) auf der dem Kupplungsglied (6, 21) abgewandten Seite befestigt werden kann.

3. Doppelsatteltasche (1) nach Anspruch 1 oder 2, wobei das Verbindungsstück (3) der Satteltasche mit mindestens einem Eingreifglied (12, 16, 19) versehen ist zum Angreifen an einem Federelement (7, 11, 15, 20), das mit einem Kupplungsglied (6, 21) an der von dem Verbindungsstück (3) abgewandten Seite vorgesehen ist.

4. Doppelsatteltasche (1) nach Anspruch 3, wobei das Verbindungsstück mit einer Vielzahl an getrennt angebrachten Eingreifgliedern (12, 19) versehen ist zur elastischen Verbindung eines Kupplungsglieds (6, 21) wahlweise mit mindestens einem gewünschten Eingreifglied (12, 19), abhängig von der Größe des Trägers (4), mit dem die Satteltasche (1) verbunden ist.

5. Doppelsatteltasche (1) nach irgendeinem der vorangehenden Ansprüche, wobei das Kupplungsglied (6, 21) mit dem Verbindungsstück (3) über einen elastischen Ring (11, 15, 20) verbunden ist.

6. Doppelsatteltasche (1) nach irgendeinem der Ansprüche 1-4, wobei das Kupplungsglied (6, 21) mit dem Verbindungsstück (3) über einen Streifen aus elastischem Material verbunden ist.

7. Doppelsatteltasche (1) nach irgendeinem der vorangehenden Ansprüche, wobei zwei Kupplungsglieder (6, 21) an gegenüberliegenden Seiten eines Federelements (7, 11, 15, 20) angreifen, welches Federelement (7, 11, 15, 20) mit dem Verbindungsstück (3) der Satteltasche (1) verbunden werden kann.

8. Doppelsatteltasche (1) nach irgendeinem der vorangehenden Ansprüche, wobei das Kupplungsglied (6, 21) aus einem Haken (6, 21) besteht.

9. Doppelsatteltasche (1) nach irgendeinem der vorangehenden Ansprüche, wobei das Kupplungsglied (6, 21) mit einer Kontaktfläche zum Angriff an einem Gepäckträger (4) mit einer elastischen Abdecklage (3') versehen ist.

10. Doppelsatteltasche (1) nach irgendeinem der vorangehenden Ansprüche, wobei das Kupplungsglied (6, 21) mit dem Verbindungsstück (3) der Satteltasche (1) über eine Führung (16, 23) zusammengefügt ist.

11. Verfahren zur Befestigung einer Fahrraddoppelsatteltasche (1) nach irgendeinem der vorangehenden Ansprüche an einem Gepäckträger (4) mit den Schritten:
A. Anbringen eines Verbindungsstücks (3) der Doppelsatteltasche (1) auf einem Gepäckträger (4), so dass die Satteltasche (1) an einer Seite am Umfang des Gepäckträgers (4) angreift,
B. Herausziehen von mindestens einem Kupplungsglied (6, 21) gegen eine Vorspannung, so dass das Kupplungsglied (6, 21) an einer Seite des Gepäckträgers (4) gegenüber der Seite, an der die Satteltasche (1) angreift, über den Außenumfang des Gepäckträgers (4) reicht, und
C. Freigabe des gegen eine Vorspannung herausgezogenen Kupplungsglieds (6, 21), so dass das Kupplungsglied (6, 21) unter einer Vorspannung an einer Seite des Gepäckträgers (4) angreift, gegenüber der Seite, an der die Satteltasche (1) angreift.

12. Verfahren nach Anspruch 11, wobei während des Schritts A. mindestens ein Kupplungsglied (6, 21), das mit dem Verbindungsstück (3) elastisch verbunden ist, mit dem Umfang des Gepäckträgers (4) in Kontakt gebracht wird.

13. Verfahren nach Anspruch 11 oder 12, wobei nach der Befestigung gemäß Schritt
C. ein Kupplungsglied (6, 21) zumindest teilweise in einen im Verbindungsstück (3) angeordneten Aufnahmeraum (10) fällt.

14. Verfahren zur Freigabe einer Doppelsatteltasche (1) nach irgendeinem der Ansprüche 1-10 mit einem Verbindungsstück (3) von einem Gepäckträger (4) mit den Schritten:
D. Verschieben von mindestens einem Kupplungsglied (6,21) gegen eine Vorspannung, welches Kupplungsglied unter Vorspannung am Umfang eines Gepäckträgers (4) angreift, an dem die Satteltasche befestigt ist, in eine Position, in der das Kupplungsglied (6, 21) vom Gepäckträger gelöst ist, so dass das Verbindungsstück (3) der Doppelsatteltasche nur noch an einer Seite am Umfang des Gepäckträgers (4) angreift, und
E. Freigabe des Verbindungsstücks (3) der Doppelsatteltasche (1), das auf einer Seite am Umfang des Gepäckträgers (4) angreift, vom Gepäckträger (4).

## Revendications

1. Double sacoche pour cycles (1) à au moins deux parties formant conteneurs (2) qui prennent appui sur les côtés opposés d'une pièce intermédiaire (3), laquelle pièce intermédiaire (3) est pourvue de moyens d'assemblage (5, 14, 18) pour attacher la sacoche (1) à un support (4),
en sachant que les moyens d'assemblage (5, 14, 18) comprennent au moins un élément d'accouplement (6, 21) fixé élastiquement à la sacoche (1) pour prendre appui sur un support (4) dans le sens contraire d'une force de rappel,
**caractérisé en ce que**
la pièce intermédiaire (3) de la sacoche (1) est pourvue d'au moins un élément de renfort épaissi (8, 17, 22) dans lequel est aménagé un évidement (10) pour recevoir partiellement un élément d'accouplement (6, 21) dans une position active, couplée.

2. Double sacoche (1) selon la revendication 1, dans laquelle les moyens d'assemblage (5, 14, 18) comprennent au moins un élément formant ressort (7, 11, 15, 20) qui est prévu à une extrémité d'un élément d'accouplement (6, 21) et qui peut être attaché à la pièce intermédiaire (3) de la sacoche (1) sur le côté distant de l'élément d'accouplement (6, 21).

3. Double sacoche (1) selon la revendication 1 ou 2, dans laquelle la pièce intermédiaire (3) de la sacoche est pourvue d'au moins un élément d'accrochage (12, 16, 19) pour s'accrocher à un élément formant ressort (7, 11, 15, 20) qui est pourvu d'un élément d'accouplement (6, 21) du côté distant de la pièce intermédiaire (3).

4. Double sacoche (1) selon la revendication 3, dans laquelle la pièce intermédiaire est pourvue d'une pluralité d'éléments d'accrochage (12, 19) espacés les uns des autres pour attacher élastiquement un élément d'accouplement (6, 21) sélectivement à au moins un élément d'accrochage (12, 19) voulu en fonction de la taille du support (4) auquel la sacoche (1) est attachée.

5. Double sacoche (1) selon l'une quelconque des revendications précédentes, dans laquelle l'élément d'accouplement (6, 21) est attaché à la pièce intermédiaire (3) par un anneau élastique (11, 15, 20).

6. Double sacoche (1) selon l'une quelconque des revendications 1-4, dans laquelle l'élément d'accouplement (6, 21) est attaché à la pièce intermédiaire (3) par une bande de matériau élastique.

7. Double sacoche (1) selon l'une quelconque des revendications précédentes, dans laquelle deux éléments d'accouplement (6, 21) prennent appui sur les côtés opposés d'un élément formant ressort (7, 11, 15, 20), lequel élément formant ressort (7, 11, 15, 20) peut être attaché à la pièce intermédiaire (3) de la sacoche (1).

8. Double sacoche (1) selon l'une quelconque des revendications précédentes, dans laquelle l'élément d'accouplement (6, 21) consiste en un crochet (6, 21).

9. Double sacoche (1) selon l'une quelconque des revendications précédentes, dans laquelle l'élément d'accouplement (6, 21) est pourvu d'une surface de contact pour prendre appui sur un support (4) par une couche de revêtement élastique (3).

10. Double sacoche (10) selon l'une quelconque des revendications précédentes, dans laquelle l'élément d'accouplement (6, 21) est attaché à la pièce intermédiaire (3) de la sacoche (1) par un guide (16, 23).

11. Procédé pour attacher une double sacoche pour cycles (1) selon l'une quelconque des revendications précédentes à un support (4) au moyen des étapes consistant à :
A. placer une pièce intermédiaire (3) de la double sacoche (1) contre un support (4) de telle sorte que la sacoche (1) prenne appui sur un côté de la périphérie du support (4) ;
B. tirer sur au moins un élément d'accouplement (6, 21) dans le sens contraire d'une force de rappel de telle sorte que l'élément d'accouplement (6, 21), d'un côté du support (4) opposé à celui sur lequel la sacoche (1) prend appui, s'étende à l'extérieur de la périphérie du support (4), et
C. lâcher l'élément d'accouplement (6, 21) tiré dans le sens contraire d'une force de rappel de telle sorte que l'élément d'accouplement (6, 21) prenne appui sous l'effet d'une force de rappel sur un côté du support (4) opposé à celui sur lequel la sacoche (1) prend appui.

12. Procédé selon la revendication 11, dans lequel durant l'étape A, au moins un élément d'accouplement (6, 21) attaché élastiquement à la pièce intermédiaire (3) est mis en contact avec la périphérie du support (4).

13. Procédé selon la revendication 11 ou 12, dans lequel après la fixation selon l'étape C, un élément d'accouplement (6, 21) tombe au moins partiellement dans un espace de réception (10) aménagé dans la pièce intermédiaire (3).

14. Procédé pour détacher une double sacoche (1) selon l'une quelconque des revendications 1-10 à pièce intermédiaire (3) d'un support (4) au moyen des étapes consistant à :
D. déplacer au moins un élément d'accouplement (6, 21) dans le sens contraire d'une force de rappel, lequel élément prend appui sous l'effet d'une force de rappel sur la périphérie d'un support (4) auquel la sacoche est attachée, jusqu'à une position dans laquelle l'élément d'accouplement (6, 21) est écarté du support de telle sorte que la pièce intermédiaire (3) de la double sacoche ne prenne plus appui que sur un côté de la périphérie du support (4), et
E. détacher du support (4) la pièce intermédiaire (3) de la double sacoche (1) qui prend appui sur un côté de la périphérie du support (4).
